# NEUE EUROPÄISCHE PATENTSCHRIFT

(11) **EP 3 527 721 B2**
(45) Veröffentlichungstag und Bekanntmachung des Hinweises auf die Entscheidung über den Einspruch: **23.09.2026**
(45) Hinweis auf die Patenterteilung: 10.06.2020
(21) Anmeldenummer: 18157386.6
(22) Anmeldetag: 19.02.2018
(51) Int. Cl.: E01C 19/48

(54) **STRASSENFERTIGER MIT LEISTUNGSANPASSERN FÜR ELEKTRISCHE EINBAUBOHLEN- HEIZEINRICHTUNGEN**
ROAD FINISHER WITH OUTPUT ADJUSTERS FOR ELECTRICAL INSERT HEATING DEVICES
FINISSEUSE DE ROUTE POURVUE D'ADAPTATEURS DE PUISSANCE POUR DISPOSITIFS DE CHAUFFAGE DE POUTRES LISSEUSES ÉLECTRIQUES

(43) Veröffentlichungstag der Anmeldung: 21.08.2019
(73) Patentinhaber: Joseph Vögele AG, 67067 Ludwigshafen (DE)
(72) Erfinder: HEINDTEL, Michael, 68199 Mannheim (DE); EUL, Achim, 68305 Mannheim (DE)
(74) Vertreter: Grünecker Patent- und Rechtsanwälte PartG mbB

(56) Entgegenhaltungen:
- EP-B1- 1 036 883
- EP-B2- 1 295 990
- WO-A1-00/47822
- WO-A1-2014/124545
- DE-C5- 19 537 691
- JP-A- 2015 206 172
- US-B1- 8 297 875

## Beschreibung

Die Erfindung betrifft einen Straßenfertiger mit elektrischer Beheizung der Einbaubohle.

Bekannte Straßenfertiger umfassen bezüglich einer Einbaufahrtrichtung vorne am Zugfahrzeug des Straßenfertigers einen Gutbunker zur Aufnahme von Einbaugut. Von dem Gutbunker wird das Einbaugut während des Einbaus über eine geeignete Längsfördereinrichtung in einen hinteren Bereich des Straßenfertigers gefördert. Dort wird das Einbaugut mittels einer Verteilerschnecke quer zur Einbaufahrtrichtung verteilt und so gleichmäßig einer von dem Zugfahrzeug hinterher gezogenen Einbaubohle zum Verdichten des Einbauguts vorgelegt. Es ist bekannt, Arbeitskomponenten der Einbaubohle, wie beispielsweise Tamperleisten, Glättbleche und/oder Pressleisten, elektrisch oder mit Gas zu beheizen, um ein Ankleben des heißen Einbaumaterials an den Arbeitskomponenten zu verhindern. Im Falle einer elektrischen Beheizung sind in der Einbaubohle Widerstands-Heizelemente verteilt, die über einen an dem Zugfahrzeug vorgesehenen Drehstromgenerator mit Drehstrom versorgt werden.

In der EP 1 036 883 B1 wurde erkannt, dass ein permanentes Betreiben der elektrischen Heizelemente der Einbaubohle mit voller Leistung den Drehstromgenerator bei ungünstigen Betriebsbedingungen stark belastet und zudem eine geringe Energieeffizienz aufweisen kann. Um diese Probleme zu lösen, wird eine getaktete Schaltung der elektrischen Heizelemente der Einbaubohle vorgeschlagen. Von einem an dem Zugfahrzeug vorgesehenen Drehstromgenerator führen Versorgungsstränge zu den auf den beiden Bohlenhälften (linke und rechte Bohlenhälfte) der Einbaubohle integrierten elektrischen Heizelementen. In den Versorgungssträngen sind außerhalb der Einbaubohle Schütze vorgesehen. Mittels temperaturabhängiger Widerstände in den Wicklungen des Drehstromgenerators wird die Temperatur des Drehstromgenerators überwacht. Wenn die Temperatur des Generators einen bestimmten Schwellenwert überschreitet, wird der Betrieb der Heizelemente der Einbaubohle auf einen getakteten Betrieb umgestellt. Dies bedeutet, dass beispielsweise die Heizelemente der linken Bohlenhälfte über eine vorbestimmte Zeitdauer, z. B. 30 Sekunden, abgeschaltet werden und nur die Heizelemente in der rechten Bohlenhälfte eingeschaltet bleiben. Nach Verstreichen der vorbestimmten Zeitdauer werden die Heizelemente der rechten Bohlenhälfte abgeschaltet und die Heizelemente der linken Bohlenhälfte wieder eingeschaltet. Dies wird permanent wiederholt, wodurch sich der Drehstromgenerator wieder abkühlen kann. Durch ein solches System lässt sich zwar der Generator gegen Überhitzung schützen, die erreichbare Energieeffizient ist aber noch verbesserungswürdig.

Aus der EP 1 295 990 B2 ist ein Straßenfertiger mit einer Einbaubohle mit einem Grundbohlenteil und beidseitig davon vorgesehenen Erweiterungsteilen zur Vergrößerung der Einbaubreite bekannt. Die Einbaubohle ist in vier Sektionen unterteilt, von denen zwei auf der Grundbohle und jeweils eine auf den beiden Erweiterungsteilen liegen. In jeder der Sektionen sind vier Widerstandsheizelemente zum Beheizen der jeweiligen Bohlensektion vorgesehen. Die Heizelemente sind über außerhalb der Einbaubohle vorgesehene Relaisschalter zur Energieversorgung mit einem Generator des Straßenfertigers verbunden, wobei jeweils ein gemeinsamer Relaisschalter zwei nebeneinanderliegenden Heizelementen vorgeschaltet ist. Mittels einer Steuereinrichtung werden die zu den Heizelementen einer Sektion korrespondierenden Relaisschalter zur Versorgung der Heizelemente geschlossen, wenn eine an der Sektion gemessene Temperatur unter einem ersten Schwellenwert liegt. Überschreitet die gemessene Temperatur einen höheren, zweiten Schwellenwert, werden die zugeordneten Relaisschalter wieder geöffnet, um die Beheizung der Sektion zu unterbrechen. Hierdurch sollen die Bohlensektionen in einem geeigneten Temperaturfenster gehalten werden. Nachteilig an diesem System ist insbesondere der hohe Verkabelungsaufwand. Zudem ist die Energieeffizient auch hier noch ausbaufähig.

Aus der WO-A-2014/124545 ist ein gattungsgemäßer Straßenfertiger mit den Merkmalen des Oberbegriffs des Anspruchs 1 bekannt.

Es ist Aufgabe der vorliegenden Erfindung, einen Straßenfertiger mit elektrischen Bohlenheizeinrichtungen bereitzustellen, der in Bezug auf Verkabelungsaufwand und Energieeffizienz verbessert ist.

Diese Aufgabe wird durch den Gegenstand von Anspruch 1 gelöst. Die abhängigen Ansprüche geben vorteilhafte Ausführungsformen der Erfindung an.

Ein erfindungsgemäßer Straßenfertiger umfasst ein Zugfahrzeug und eine bezüglich der Einbaufahrtrichtung des Straßenfertigers hinter dem Zugfahrzeug hergezogene Einbaubohle zum Verdichten von Einbaugut. In Einbaufahrtrichtung vorne an dem Zugfahrzeug ist ein Gutbunker zur Aufnahme von Einbaugut vorgesehen. Das Zugfahrzeug umfasst einen Generator, insbesondere einen Drehstromgenerator, zum Bereitstellen elektrischer Leistung. Vorzugsweise wird der Generator über ein Primärantriebsaggregat des Straßenfertigers, insbesondere einen Dieselmotor, betrieben. An der Einbaubohle ist eine Mehrzahl von elektrischen Heizeinrichtungen, insbesondere Widerstandsheizeinrichtungen, zum elektrischen Beheizen der Einbaubohle vorgesehen. Der Straßenfertiger umfasst eine Stromverteilungsanordnung mit einem Leitungsnetz, das dazu konfiguriert ist, die elektrischen Heizeinrichtungen mit der von dem Generator bereitgestellten elektrischen Leistung zu versorgen. Die Stromverteilungsanordnung umfasst eine Mehrzahl von an der Einbaubohle vorgesehenen Leistungsanpassern, die jeweils einer der elektrischen Heizeinrichtungen zugeordnet sind. Eine Steuereinrichtung des Straßenfertigers ist dazu konfiguriert, die Leistungsanpasser dazu anzusteuern, die der jeweils zugeordneten elektrischen Heizeinrichtung zugeführte Leistung individuell dynamisch einzustellen.

Dadurch, dass die einzelnen Leistungsanpasser individuell dynamisch eingestellt werden, lässt sich die Energieeffizienz der Bohlenheizung deutlich verbessern. Die Heizeinrichtungen können im Betrieb des Straßenfertigers jeweils an die am Ort der jeweiligen Heizeinrichtung benötigte Heizleistung individuell angepasst werden. Die Generatorspannung kann weitgehend stabil gehalten werden, insbesondere in einem günstigen Betriebsbereich.

Dadurch, dass die Leistungsanpasser direkt an der Einbaubohle vorgesehen sind, lässt sich der Verkabelungs- und Verschaltungsaufwand verringern. Es ist somit nicht notwendig, bereits in dem am Zugfahrzeug befindlichen Teil des Leitungsnetzes eine Aufteilung auf eine Vielzahl separater Bohlenheizkreise vorzunehmen, wodurch der Materialaufwand bei der Verdrahtung der Heizeinrichtungen sinkt und zudem die Einbaubohle elektrisch leichter mit dem Zugfahrzeug koppelbar ist. Der Platzbedarf in einem Schaltschrank am Zugfahrzeug des Straßenfertigers wird verringert.

Vorzugsweise sind die Leistungsanpasser dazu ausgelegt, die der jeweils zugeordneten elektrischen Heizeinrichtung zugeführte Leistung stufenlos einzustellen. Hierdurch kann die Heizleistung für jede Heizeinrichtung genau an den momentanen Bedarf angepasst werden und vorzugsweise mit dem eingestellten Leistungsbedarf kontinuierlich betrieben werden, bis sich eine Änderung des Leistungsbedarfs ergibt. Hierdurch kann die Energieeffizienz erhöht werden. Zudem kann die Bohlentemperatur sowohl zeitlich als auch räumlich gleichmäßig gehalten werden, was sich positiv auf das Einbauergebnis auswirken kann.

Die Leistungsanpasser können beispielsweise Leistungssteller und/oder Leistungsschalter umfassen. Besonders bevorzugt ist die Verwendung von Thyristorstellern. Mittels Leistungsstellern oder Leistungsschaltern lässt sich die einem Heizelement zugeführte Leistung variabel von 0 - 100 % einstellen. Leistungssteller und Leistungsschalter sind unproblematisch kommerziell erhältlich.

Die Leistungsanpasser können dazu konfiguriert sein, die der jeweils zugeordneten Heizeinrichtung zugeführte Leistung jeweils individuell durch Pulspaketsteuerung einzustellen. Hierzu können die Leistungsanpasser dazu konfiguriert sein, ein insbesondere niederfrequentes, individuelles Takten der jeweils zugeordneten Heizeinrichtung zu betreiben, so dass in jedem Takt immer nur eine bestimmte Anzahl von Sinuswellen des Versorgungsstroms durchgelassen wird. Durch Verändern der individuellen Taktung lässt sich die der zugeordneten Heizeinrichtung zugeführte Leistung individuell einstellen. Eine Pulspaketsteuerung ist besonders vorteilhaft, wenn die Leistungsanpasser Leistungsschalter umfassen.

Es wäre auch denkbar, dass die Leistungsanpasser dazu konfiguriert sind, die der jeweils zugeordneten Heizeinrichtung zugeführte Leistung durch Phasenanschnittsteuerung einzustellen. Hierzu können die Leistungsanpasser dazu konfiguriert sein, Sinuswellen des Versorgungsstroms jeweils nur teilweise durchzulassen. Beispielsweise kann von jeder Sinuswelle am Anfang oder am Ende der Sinuswelle abhängig von der zuzuführenden Leistung ein Bereich "abgeschnitten" und nicht dem Leistungsanpasser zugeführt werden. Durch Anpassen des abgeschnittenen Bereichs lässt sich die der zugeordneten Heizeinrichtung zugeführte Leistung individuell einstellen. Eine Phasenanschnittsteuerung ist besonders vorteilhaft, wenn die Leistungsanpasser Leistungssteller umfassen.

Vorzugsweise sind die Leistungsanpasser in dem Leitungsnetz jeweils der zugeordneten elektrischen Heizeinrichtung elektrisch vorgeschaltet. Insbesondere können die jeweiligen Leistungsanpasser der zugeordneten elektrischen Heizeinrichtung direkt vorgeschaltet sein.

Vorzugsweise sind die Leistungsanpasser parallel zueinander geschaltet. So lässt sich die individuelle Einstellbarkeit der den einzelnen Heizeinrichtungen zugeführten Leistung besonders einfach realisieren.

Der an der Einbaubohle befindliche Teil des Leitungsnetzes kann Knotenpunkte aufweisen, an denen sich das Leitungsnetz in Richtung zumindest auf unterschiedliche Leistungsanpasser und die zugeordneten Heizeinrichtungen aufzweigt. Dadurch, dass die Knotenpunkte an der Einbaubohle vorgesehen sind, verringert sich der Materialbedarf bei der Verkabelung des Straßenfertigers. Zudem wird das elektrische Anschließen der Einbaubohle an den Straßenfertiger und somit auch ein Austauschen der Einbaubohle vereinfacht.

Das Leitungsnetz kann eine Hauptsicherung umfassen, die dem Generator nachgeschaltet und allen Heizeinrichtungen vorgeschaltet ist. Eine solche Hauptsicherung kann insbesondere auf einfache Art und Weise dem Generator direkt nachgeschaltet sein.

Die Steuereinrichtung kann dazu konfiguriert sein, für die Leistungsanpasser jeweils einen Einstellwert zu ermitteln und die Leistungsanpasser basierend auf dem jeweiligen Einstellwert anzusteuern. Insbesondere können die Einstellwerte für die Leistungsanpasser individuell und/oder unabhängig voneinander ermittelt werden. Ein Einstellwert kann einer Art Sollvorgabe für die Heizleistung der zugeordneten Heizeinrichtung entsprechen. Diese Sollvorgabe kann über die Leistungsanpasser direkt und unmittelbar umgesetzt werden.

Vorzugsweise umfasst der Straßenfertiger eine Eingabeeinrichtung, die einem Bediener eine Eingabe des Einstellwerts gemeinsam für alle Heizeinrichtungen, für Gruppen von Heizeinrichtungen und/oder für einzelne Heizeinrichtungen erlaubt. Der Bediener kann die Heizleistung abhängig von den Betriebsbedingungen, wie beispielsweise der Art des verwendeten Einbauguts, der Außentemperatur, dem Wetter, einer Temperatur des Einbauguts, der Art der einzubauenden Schicht (beispielsweise Deckschicht oder Tragschicht) o. Ä., direkt eingeben und so die Leistung der einzelnen Heizeinrichtungen steuern. In Ausführungsformen, bei denen die Eingabe des Einstellwerts für Gruppen von Heizeinrichtungen oder für einzelne Heizeinrichtungen möglich ist, kann der Bediener individuell einstellen, ob und in welchem Maße bestimmte Bereiche der Einbaubohle stärker beheizt werden sollen. Beispielsweise können Heizeinrichtungen an den seitlichen Ausziehteilen einer Ausziehbohle größere Leistungen zugeführt werden, da bei Erreichen der seitlich äußeren Bereiche des Fahrbahnabschnitts das Einbaugut schon in gewissem Maße abgekühlt sein kann.

Es wäre auch denkbar, dass die Einstellwerte von der Steuereinrichtung automatisch generiert werden, beispielsweise basierend auf Sensorinformationen (z.B. der Außentemperatur, der Temperatur des Einbauguts und/oder der Einbaustärke) und/oder bekannten Einbauparametern (z.B. der Art der einzubauenden Schicht, der Bohlenkonfiguration und/oder der Art des verwendeten Einbauguts).

Vorzugsweise umfasst der Straßenfertiger einen oder mehrere Temperatursensoren an der Einbaubohle. Die Steuereinrichtung kann dazu konfiguriert sein, bei der Ansteuerung der Leistungsanpasser jeweils neben dem Einstellwert auch einen oder mehrere Ausgaben des Temperatursensors oder der Temperatursensoren zu berücksichtigen. Es wäre auch denkbar, dass die Steuereinrichtung dazu konfiguriert ist, die Einstellwerte basierend auf Ausgaben des Temperatursensors oder der Temperatursensoren zu ermitteln. Durch Berücksichtigen der Ausgaben des Temperatursensors oder der Temperatursensoren lässt sich die Temperatur bestimmter Bereiche der Einbaubohle oder die Temperatur der Einbaubohle insgesamt in einen gewünschten Temperaturbereich einstellen. Die Ausgaben des Temperatursensors oder der Temperatursensoren könnten von der Steuereinrichtung auch dazu verwendet werden, ein Überhitzen der Bohle zu erkennen und diesem entgegenzuwirken und/oder ein Unterschreiten einer Mindesttemperatur zu verhindern.

Vorzugsweise ist jedem Leistungsanpasser ein Temperatursensor zugeordnet. Die Ausgabe des jeweiligen Temperatursensors kann in die Ermittlung des Einstellwerts für den zugeordneten Leistungsanpasser einfließen oder zusätzlich zu dem jeweiligen Einstellwert berücksichtigt werden. So lässt sich die Temperatur an den einzelnen Heizelementen individuell auf einen gewünschten Wert einstellen und dort halten.

Vorzugsweise ist die Steuereinrichtung dazu konfiguriert, die Leistungsanpasser über eine Power Line Kommunikation auf dem Leitungsnetz zum Versorgen der Heizeinrichtungen mit der von dem Generator bereitgestellten elektrischen Leistung anzusteuern. Hierdurch ist es nicht notwendig, zusätzliche Steuerleitungen zum Ansteuern der Leistungsanpasser vorzusehen. Es wäre aber auch denkbar, die Leistungsanpasser alternativ über separate, analoge oder digitale Steuerleitungen anzusteuern. Die Ansteuerung der Leistungsanpasser könnte insbesondere über ein Bussystem erfolgen. Beispielsweise könnten die Leistungsanpasser über einen CAN-Bus oder über eine One-Wire-Anbindung angesteuert werden.

Die Leistungsanpasser sind vorzugsweise dazu konfiguriert, einen Ausfall oder einen Fehlerzustand der zugeordneten Heizeinrichtung zu erkennen und an die Steuereinrichtung zu melden. Somit kann auf zusätzliche Überwachungseinheiten verzichtet werden und Stördaten liegen zentral an der Steuereinheit vor.

Nachfolgend soll die Erfindung anhand eines Ausführungsbeispiels unter Bezugnahme auf die beigefügten Figuren weiter erläutert werden. Dabei zeigen
- Figur 1: eine schematische Seitenansicht eines Straßenfertigers gemäß einer Ausführungsform; und
- Figur 2: eine schematische Darstellung des Straßenfertigers gemäß der Ausführungsform als Blockschaltbild in Draufsicht.

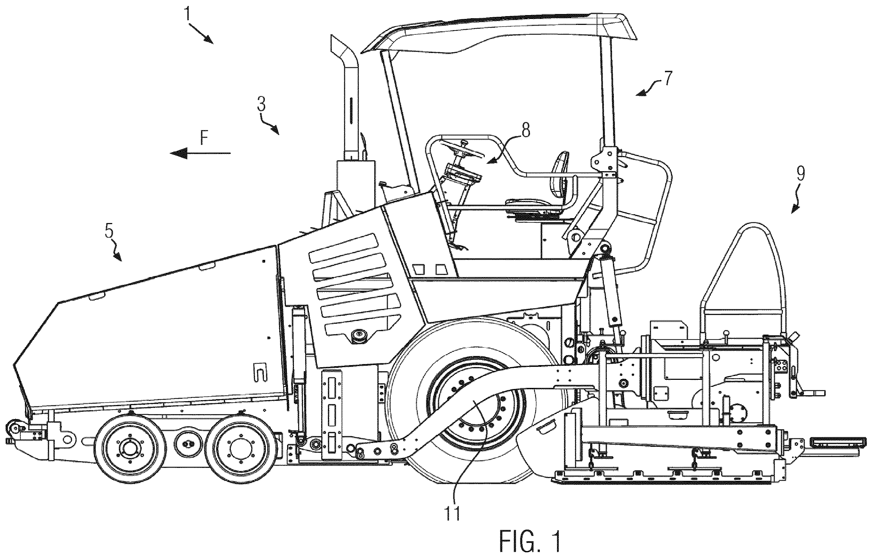

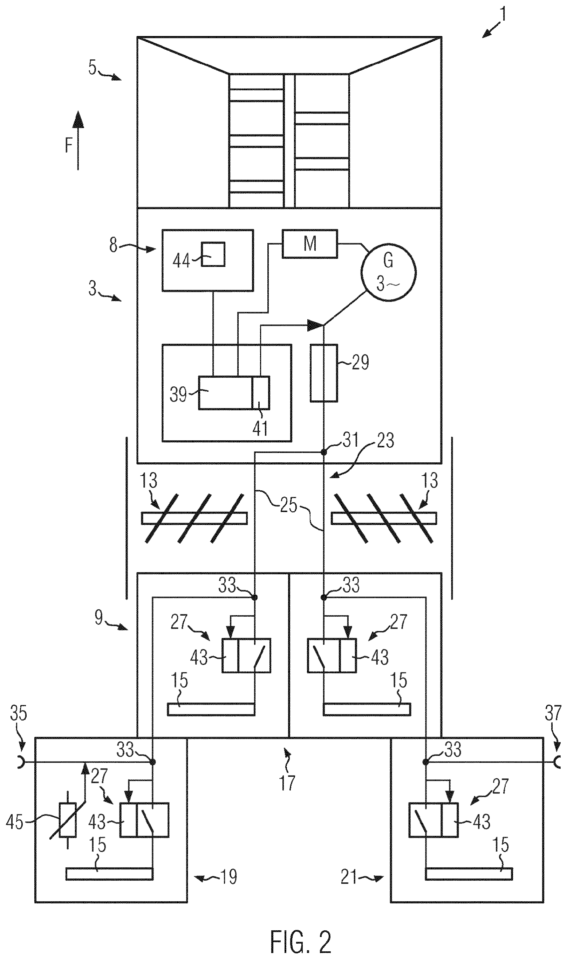

Fig. 1 zeigt in schematischer Seitenansicht einen erfindungsgemäßen Straßenfertiger 1 gemäß einer Ausführungsform. Der Straßenfertiger 1 umfasst ein selbstfahrendes Zugfahrzeug 3 mit einem in Einbaufahrtrichtung F vorne liegenden Gutbunker 5 zur Aufnahme von Einbaugut. An dem Zugfahrzeug 3 ist zudem ein Bedienstand 7 vorgesehen, welcher Eingabeeinrichtungen 8 zum Steuern des Straßenfertigers 1 umfasst sowie Platz für eine Bedienperson bereitstellt. Eine Einbaubohle 9 zum Verdichten von Einbaugut wird über beidseitig an dem Zugfahrzeug 3 angebrachte Zugholme 11 hinter dem Zugfahrzeug 3 hergezogen. An dem Zugfahrzeug 3 ist eine Fördereinrichtung zum Fördern von Einbaugut von dem Gutbunker 5 in einen hinteren Bereich des Straßenfertigers 1 vorgesehen. Im hinteren Bereich des Straßenfertigers 1 verlässt das Einbaugut die Fördereinrichtung durch einen Materialauslass und gelangt zu einer Verteilerschnecke 13 (siehe Fig. 2) zum Verteilen des Einbauguts vor der Einbaubohle 9 quer zur Einbaufahrtrichtung F.

Wie in Fig. 2 dargestellt, ist an dem Zugfahrzeug 3 ein Generator G, im vorliegenden Ausführungsbeispiel ein Drehstromgenerator, vorgesehen. Der Generator G wird von dem Primärantriebsaggregat M des Straßenfertigers 1, beispielsweise einem Dieselmotor, angetrieben und stellt elektrische Leistung bereit. An der Einbaubohle 9 ist eine Mehrzahl von elektrischen Heizeinrichtungen 15 zum elektrischen Beheizen der Einbaubohle 9 vorgesehen. Bei den Heizeinrichtungen 15 kann es sich um Widerstandsheizelemente handeln, insbesondere um Heizstäbe. Die Heizeinrichtungen 15 können dazu ausgelegt sein, die Einbaubohle 9 im Wesentlichen auf die Temperatur des heißen Einbauguts zu heizen, um ein Ankleben des Einbauguts an die Einbaubohle 9 zu vermeiden. In der dargestellten Ausführungsform handelt es sich bei der Einbaubohle 9 um eine Ausziehbohle mit einer Grundbohle 17 und bezüglich der Einbaufahrtrichtung F beidseitig daran angebrachten Ausziehteilen 19, 21, die zum Anpassen der Einbaubreite ein- und ausgefahren werden können. Es wäre aber auch denkbar, dass die Einbaubohle 9 lediglich die Grundbohle 17 umfasst, oder dass Ausziehteile 19, 21 vorgesehen sind.

Sowohl an der Grundbohle 17 als auch an den Ausziehteilen 19, 21 sind elektrische Heizeinrichtungen 15 vorgesehen. Der Straßenfertiger 1 umfasst eine Stromverteilungsanordnung 23 mit einem Leitungsnetz 25, das die elektrischen Heizeinrichtungen 15 mit der von dem Generator G bereitgestellten elektrischen Leistung versorgt. Die Stromverteilungsanordnung 23 umfasst zudem eine Mehrzahl von Leistungsanpassern 27, die jeweils einer der elektrischen Heizeinrichtungen 15 zugeordnet sind. Die Leistungsanpasser 27 sind in dem Leitungsnetz 25 jeweils der zugeordneten elektrischen Heizeinrichtung 15 direkt elektrisch vorgeschaltet und sind dazu ausgelegt, die der jeweils zugeordneten elektrischen Heizeinrichtung 15 zugeführte Leistung stufenlos einzustellen.

Bei den Leistungsanpassern 27 kann es sich beispielsweise um Leistungssteller handeln, wobei Thyristorsteller besonders bevorzugt sind. Solche Leistungssteller können dazu konfiguriert sein, die der jeweils zugeordneten Heizeinrichtung 15 zugeführte Leistung durch Phasenanschnittsteuerung einzustellen. Hierzu können die Leistungssteller Sinuswellen des Versorgungsstroms jeweils nur teilweise durchzulassen. Beispielsweise kann bei Bedarf von jeder Sinuswelle am Anfang oder am Ende der Sinuswelle abhängig von der zuzuführenden Leistung ein Bereich abgeschnitten werden, also nicht dem zugehörigen Leistungsanpasser 15 zugeführt werden. Beispielsweise durch Anpassen der Länge des abgeschnittenen Bereichs lässt sich die der zugeordneten Heizeinrichtung 15 zugeführte Leistung individuell einstellen.

Auch eine Ausbildung der Leistungsanpasser 27 als Leistungsschalter ist denkbar. Solche Leistungsschalter können dazu ausgelegt sein, die der jeweils zugeordneten Heizeinrichtung 15 zugeführte Leistung jeweils individuell durch Pulspaketsteuerung einzustellen. Die Leistungsschalter können die Leistung der jeweils zugeordneten Heizeinrichtung 15 beispielsweise durch niederfrequentes individuelles Takten einstellen, so dass in jedem Takt immer nur eine bestimmte Anzahl von Sinuswellen des Versorgungsstroms durchgelassen wird. Durch Verändern der individuellen Taktung lässt sich die der zugeordneten Heizeinrichtung 15 zugeführte Leistung individuell einstellen. Insbesondere kann mittels der Leistungsanpasser 27 jede elektrische Heizeinrichtung 15 individuell in einem Bereich zwischen 0 - 100 % ihrer Nennleistung betrieben werden.

Wie in Fig. 2 gezeigt, sind die Leistungsanpasser 27 in dem Leitungsnetz 25 zueinander parallel geschaltet. Das Leitungsnetz 25 umfasst eine Hauptsicherung 29, die dem Generator G insbesondere direkt nachgeschaltet ist und allen Heizeinrichtungen 15 vorgeschaltet ist. Die Hauptsicherung 29 kann an dem Zugfahrzeug 3, insbesondere in einem Sicherungskasten des Zugfahrzeugs 3, vorgesehen sein. In der gezeigten Ausführungsform ist ein erster Knotenpunkt 31 des Leitungsnetzes 25 am Zugfahrzeug 3 vorgesehen. Hier wird die Leistungsversorgung zwischen links und rechts von einer Mittelachse der Grundbohle 17 vorliegenden Heizeinrichtungen 15 aufgeteilt. Dies ist aber nicht zwingend erforderlich und die Aufteilung könnte auch vollständig an der Einbaubohle 9 erfolgen. An der Einbaubohle 9 umfasst das Leitungsnetz 25 weitere Knotenpunkte 33, an denen sich das Leitungsnetz 25 nach einem Parallelschaltungsschema jeweils in Richtung auf unterschiedliche Leistungsanpasser 27 und die zugeordneten Heizeinrichtungen 15 aufzweigt. Die Leistungsanpasser 27 sind jeweils zwischen der zugeordneten Heizeinrichtung 15 und dem entsprechenden Knotenpunkt 33 vorgesehen.

In der gezeigten Ausführungsform sind an den Ausziehteilen 19, 21 der Einbaubohle 9 mit dem Leitungsnetz 25 verbundene Anschlüsse 35, 37 vorgesehen, die zu elektrischen Versorgung optional anbaubarer weiterer Bohlenteile dienen.

Der Straßenfertiger 1 umfasst eine Steuereinrichtung 39, die dazu konfiguriert ist, die Leistungsanpasser 27 dazu anzusteuern, die der jeweils zugeordneten elektrischen Heizeinrichtung 15 zugeführte Leistung individuell dynamisch einzustellen. In der gezeigten Ausführungsform erfolgt die Kommunikation zwischen der Steuereinrichtung 39 und den Leistungsanpassern 27 über eine Power Line Kommunikation (PLC) auf dem Leitungsnetz 25. Leitungen des Leitungsnetzes 25 dienen also gleichzeitig zum Versorgen der Heizeinrichtungen 15 mit Strom von dem Generator G und zum Übermitteln von Kommunikation bzw. Befehlen zwischen der Steuereinrichtung 39 und den Leistungsanpassern 27. Wie in Fig. 2 dargestellt, kann die Steuereinrichtung 39 eine Sender- und Empfängereinheit 41 zum Senden und Empfangen von Signalen mittels Power Line Kommunikation über das Leitungsnetz 25 umfassen. Die Leistungsanpasser 27 können zum Empfangen von Signalen von der Steuereinrichtung 39 mittels Power Line Kommunikation Empfangseinheiten 43 umfassen. Vorzugsweise sind die Leistungsanpasser 27 auch noch dazu konfiguriert, einen Ausfall oder einen Fehlerzustand der zugeordneten Heizeinrichtung 15 zu erkennen und diesen an die Steuereinrichtung 39 zu melden. Hierzu können die Empfangseinheiten 43 der Leistungsanpasser 27 beispielsweise als Sende- und Empfangseinheiten zur Power Line Kommunikation ausgebildet sein und somit eine bidirektionale Kommunikation mit der Steuereinrichtung 39 erlauben. Ausfälle oder Fehlerzustände von Heizeinrichtungen 15 können beispielsweise an einem an der Eingabeeinheit 8 vorgesehenen Display 44 mittels der Steuereinrichtung 39 angezeigt werden.

Wie erwähnt, ist die Steuereinrichtung 39 dazu konfiguriert, die Leistungsanpasser 27 individuell dynamisch anzusteuern, um die der jeweils zugeordneten elektrischen Heizeinrichtung 15 zugeführte Leistung anzupassen. Hierzu kann die Steuereinrichtung 39 für jeden Leistungsanpasser 27 einen Einstellwert ermitteln, basierend auf welchem der Leistungsanpasser 27 dann angesteuert wird. Der Einstellwert kann einen bestimmten der der zu dem jeweiligen Leistungsanpasser 27 korrespondierenden Heizeinrichtung 15 zuzuführenden Leistungslevel angeben. Die Steuereinrichtung 39 kann für jeden Leistungsanpasser 27 einen eigenen Einstellwert ermitteln, wobei die Werte der Einstellwerte durchaus für alle Heizeinrichtungen 15 identisch sein können. Die Einstellwerte können durch die Steuereinrichtung 39 individuell und einzeln anpassbar sein.

Gemäß einer Ausführungsform sind die Einstellwerte von einem Bediener mittels der Eingabeeinrichtung 8 eingebbar. Die Einstellwerte können für alle Heizeinrichtungen 15 gemeinsam, für Gruppen von Heizeinrichtungen 15 oder für einzelne Heizeinrichtungen 15 eingebbar sein. Es ist auch denkbar, dass der Bediener zwischen einer Eingabe gemeinsam für alle Heizeinrichtungen 15, für Gruppen von Heizeinrichtungen 15 und/oder für einzelne Heizeinrichtungen 15 wählen kann. Beispielsweise können die Einstellwerte als Prozentangaben eingebbar sein, die die für eine bestimmte Heizeinrichtung 15 gewünschte Heizleistung in Prozent der Nennleistung der Heizeinrichtung 15 angeben (beispielsweise 0 - 100 %). Ein Bediener kann einen gewünschten Einstellwert beispielweise abhängig von dem verwendeten Einbaugut und/oder der Außentemperatur eingeben. Außerdem kann der Einstellwert beispielweise an die Einbaufahrgeschwindigkeit des Straßenfertigers 1 bedarfsgemäß angepasst werden. Der Bediener kann auch die einzelnen Heizeinrichtungen 15 mit unterschiedlichen Leistungen versorgen. Beispielsweise können Heizeinrichtungen 15 der Ausziehteile 19, 21 der Einbaubohle 9 mit höherer Heizleistung versorgt werden. Bei einer Veränderung der Einbaubreite und einem damit einhergehenden Ausfahren der Ausziehteile 19, 21 der Einbaubohle 9 kann die Heizleistung insbesondere für die jeweils außen liegenden Heizeinrichtungen 15 angepasst werden. Vorzugsweise sind die Einstellwerte jederzeit während des Betriebs des Straßenfertigers 1 anpassbar.

Optional kann an der Einbaubohle 9 ein Temperatursensor 45 vorgesehen sein. Der Temperatursensor 45 kann eine Temperatur an der Einbaubohle 9 messen und ein Messergebnis an die Steuereinrichtung 39 weitergeben, insbesondere mittels Power Line Kommunikation. Die Steuereinrichtung 39 kann dazu konfiguriert sein, bei der Ansteuerung der Leistungsanpasser 27 neben den insbesondere von dem Benutzer eingegebenen Einstellwerten auch die Ausgabe des Temperatursensors 45 zu berücksichtigen. Beispielsweise könnte die Steuereinrichtung 39 dazu konfiguriert sein, die den Heizeinrichtungen 15 zugeführte Leistung automatisch zu erhöhen, wenn der Temperatursensor 45 das Unterschreiten einer vorbestimmten Schwelltemperatur meldet. In einer einfachen Ausführungsform ist es ausreichend, wenn lediglich ein Temperatursensor 45 vorgesehen ist. Dieser könnte, wie in der gezeigten Ausführungsform, in einem seitlich äußeren Bereich der Einbaubohle 9 vorgesehen sein, da hier die geringsten Temperaturen zu erwarten sind. Gemäß einer Weiterbildung wäre aber auch denkbar, eine Vielzahl von Temperatursensoren 45 vorzusehen. Insbesondere könnte jedem Leistungsanpasser 27 ein Temperatursensor 45 zugeordnet sein. In diesem Fall könnte eine Anpassung der Einstellwerte jeweils basierend auf der Ausgabe des dem entsprechenden Leistungsanpasser 27 zugeordneten Temperatursensors 45 erfolgen. Es versteht sich, dass die Kommunikation zwischen der Steuereinrichtung 39 und den Leistungsanpassern 27 beziehungsweise dem Temperatursensor 45 nicht zwingend über eine Power Line Kommunikation erfolgen muss. Es wäre auch denkbar, separate Steuerleitungen oder Signalleitungen vorzusehen und die Leistungsanpasser 27 über diese durch ein analoges oder digitales Signal anzusteuern. Auch das Vorsehen separater Signalleitungen zu dem Temperatursensor 45 wäre denkbar. Insbesondere können die Leistungsanpasser 27 über ein Bus-System angesteuert werden, mit dem vorzugsweise auch optional vorhandene Temperatursensoren 45 verbunden sind. Eine Ansteuerung der Leistungsanpasser 27 lässt sich vorteilhafterweise über einen CAN-Bus oder über eine One-Wire-Anbindung realisieren.

Der Generator G könnte ausschließlich zur Versorgung der Heizeinrichtungen 15 vorgesehen sein. Es wäre aber auch denkbar, dass der Generator G weitere am Straßenfertiger 1 vorgesehene Verbraucher mit Strom versorgt.

Die Steuereinrichtung 39 kann beispielsweise einen Prozessor und einen Speicher mit Programminstruktionen umfassen. Es wäre denkbar, dass die Steuereinrichtung 39 als kompaktes Bauelement vorgesehen ist. Es ist aber auch denkbar, dass Komponenten der Steuereinrichtung 39 über den Straßenfertiger 1 verteilt sind. Die Steuereinrichtung 39 könnte Teil einer übergeordneten Steuereinrichtung des Straßenfertigers 1 sein oder zusätzlich zu einer solchen vorliegen.

## Patentansprüche

1. Straßenfertiger (1) mit einem Zugfahrzeug (3), das einen in Einbaufahrtrichtung (F) vorne liegenden Gutbunker (5) zur Aufnahme von Einbaugut umfasst, und mit einer in Einbaufahrtrichtung (F) hinter dem Zugfahrzeug (3) hergezogenen Einbaubohle (9) zum Verdichten von Einbaugut, wobei
an dem Zugfahrzeug (3) ein Generator (G) zum Bereitstellen elektrischer Leistung vorgesehen ist,
an der Einbaubohle (9) eine Mehrzahl von elektrischen Heizeinrichtungen (15) zum elektrischen Beheizen der Einbaubohle (9) vorgesehen ist,
der Straßenfertiger (1) eine Stromverteilungsanordnung (23) mit einem Leitungsnetz (25) umfasst, das dazu konfiguriert ist, die elektrischen Heizeinrichtungen (15) mit der von dem Generator (G) bereitgestellten elektrischen Leistung zu versorgen,
**dadurch gekennzeichnet, dass**
die Stromverteilungsanordnung (23) eine Mehrzahl von an der Einbaubohle (9) vorgesehenen Leistungsanpassern (27) umfasst, die jeweils einer der elektrischen Heizeinrichtungen (15) zugeordnet sind, und
der Straßenfertiger (1) eine Steuereinrichtung (39) umfasst, die dazu konfiguriert ist, die Leistungsanpasser (27) dazu anzusteuern, die der jeweils zugeordneten elektrischen Heizeinrichtung (15) zugeführte Leistung individuell dynamisch einzustellen,
wobei die Leistungsanpasser (27) dazu konfiguriert sind, die der jeweils zugeordneten Heizeinrichtung (15) zugeführte Leistung durch Pulspaketsteuerung einzustellen, oder wobei die Leistungsanpasser (27) dazu konfiguriert sind, die der jeweils zugeordneten Heizeinrichtung (15) zugeführte Leistung durch Phasenanschnittsteuerung einzustellen.

2. Straßenfertiger nach Anspruch 1, wobei die Leistungsanpasser (27) dazu ausgelegt sind, die der jeweils zugeordneten elektrischen Heizeinrichtung (15) zugeführte Leistung stufenlos einzustellen.

3. Straßenfertiger nach Anspruch 1 oder 2, wobei die Leistungsanpasser (27) Leistungssteller, insbesondere Thyristorsteller, und/oder Leistungsschalter umfassen.

4. Straßenfertiger nach einem der vorangehenden Ansprüche, wobei die Leistungsanpasser (27) in dem Leitungsnetz (25) jeweils der zugeordneten elektrischen Heizeinrichtung (15) elektrisch vorgeschaltet sind.

5. Straßenfertiger nach einem der vorangehenden Ansprüche, wobei die Leistungsanpasser (27) parallel zueinander geschaltet sind.

6. Straßenfertiger nach einem der vorangehenden Ansprüche, wobei ein an der Einbaubohle (9) befindlicher Teil des Leitungsnetzes (25) Knotenpunkte (33) aufweist, an denen sich das Leitungsnetz (25) in Richtung zumindest auf unterschiedliche Leistungsanpasser (27) und die zugeordneten Heizeinrichtungen (15) aufzweigt.

7. Straßenfertiger nach einem der vorangehenden Ansprüche, wobei das Leitungsnetz (25) eine Hauptsicherung (29) umfasst, die dem Generator (G) nachgeschaltet und allen Heizeinrichtungen (15) vorgeschaltet ist.

8. Straßenfertiger nach einem der vorangehenden Ansprüche, wobei die Steuereinrichtung (39) dazu konfiguriert ist, für die Leistungsanpasser (27) jeweils einen Einstellwert zu ermitteln und die Leistungsanpasser (27) basierend auf dem jeweiligen Einstellwert anzusteuern.

9. Straßenfertiger nach Anspruch 8, welcher zudem eine Eingabeeinrichtung (8) umfasst, die einem Bediener eine Eingabe des Einstellwerts gemeinsam für alle Heizeinrichtungen (15), für Gruppen von Heizeinrichtungen (15) und/oder für einzelne Heizeinrichtungen (15) erlaubt.

10. Straßenfertiger nach Anspruch 8 oder 9, welcher zudem einen oder mehrere Temperatursensoren (45) an der Einbaubohle (9) umfasst, wobei die Steuereinrichtung (39) dazu konfiguriert ist, bei der Ansteuerung der Leistungsanpasser (27) jeweils neben dem Einstellwert auch einen oder mehrere Ausgaben des Temperatursensors (45) oder der Temperatursensoren (45) zu berücksichtigen.

11. Straßenfertiger nach Anspruch 10, wobei jedem Leistungsanpasser (27) ein Temperatursensor (45) zugeordnet ist.

12. Straßenfertiger nach einem der vorangehenden Ansprüche, wobei die Steuereinrichtung (39) dazu konfiguriert ist, die Leistungsanpasser (27) über eine Power Line Kommunikation auf dem Leitungsnetz (25) zum Versorgen der Heizeinrichtungen (15) mit der von dem Generator (G) bereitgestellten elektrischen Leistung anzusteuern, oder die Leistungsanpasser (27) über einen CAN-Bus oder über eine One-Wire-Anbindung anzusteuern.

13. Straßenfertiger nach einem der vorangehenden Ansprüche, wobei die Leistungsanpasser (27) dazu konfiguriert sind, einen Ausfall oder einen Fehlerzustand der zugeordneten Heizeinrichtung (15) zu erkennen und an die Steuereinrichtung (39) zu melden.

## Claims

1. Road finisher (1) comprising a towing vehicle (3) which comprises a material hopper (5) which is at the front in paving travel direction (F) for receiving paving material, and comprising a paving screed (9) which is pulled behind the towing vehicle (3) in paving travel direction (F) for compacting paving material, wherein
a generator (G) for providing electrical power is provided on the towing vehicle (3),
a plurality of electric heating devices (15) are provided on the paving screed (9) for electrically heating the paving screed (9),
the road finisher (1) comprises a power distribution arrangement (23) having a line network (25) configured to supply the electric heating devices (15) with the electrical power provided by the generator (G),
**characterized in that**
the power distribution arrangement (23) comprises a plurality of power adjusters (27) provided on the paving screed (9) and each associated with one of the electric heating devices (15), and
the road finisher (1) comprises a control device (39) configured to control the power adjusters (27) to individually dynamically adjust the power supplied to the respectively associated electric heating device (15),
wherein the power adjusters (27) are configured to adjust the power supplied to the respectively associated heating device (15) by pulse package control, or wherein the power adjusters (27) are configured to adjust the power supplied to the respectively associated heating device (15) by phase angle control.

2. Road finisher according to claim 1, wherein the power adjusters (27) are configured to continuously adjust the power supplied to the respectively associated electric heating device (15).

3. Road finisher according to claim 1 or 2, wherein the power adjusters (27) comprise power controllers, in particular thyristor controllers, and/or power switches.

4. Road finisher according to one of the preceding claims, wherein the power adjusters (27) in the line network (25) are each electrically connected upstream of the associated electric heating device (15).

5. Road finisher according to one of the preceding claims, wherein the power adjusters (27) are connected in parallel to one another.

6. Road finisher according to one of the preceding claims, wherein a part of the line network (25) located on the paving screed (9) has nodes (33) at which the line network (25) branches at least towards different power adjusters (27) and the associated heating devices (15).

7. Road finisher according to one of the preceding claims, wherein the line network (25) comprises a main fuse (29) which is connected downstream of the generator (G) and upstream of all heating devices (15).

8. Road finisher according to one of the preceding claims, wherein the control device (39) is configured to determine a respective setting value for the power adjusters (27) and to control the power adjusters (27) on the basis of the respective setting value.

9. Road finisher according to claim 8, which further comprises an input device (8) which enables an operator to enter the setting value for all heating devices (15) together, for groups of heating devices (15) and/or for individual heating devices (15).

10. Road finisher according to claim 8 or 9, which further comprises one or more temperature sensors (45) on the paving screed (9), wherein the control device (39) is configured, when the power adjusters (27) are controlled, to take into account not only the setting value but also one or more outputs of the temperature sensor (45) or the temperature sensors (45).

11. Road finisher according to claim 10, wherein a temperature sensor (45) is assigned to each power adjuster (27).

12. Road finisher according to one of the preceding claims, wherein the control device (39) is configured to control the power adjusters (27) via a power line communication on the line network (25) for supplying the heating devices (15) with the electrical power provided by the generator (G), or to control the power adjusters (27) via a CAN bus or via a one-wire connection.

13. Road finisher according to one of the preceding claims, wherein the power adjusters (27) are configured to detect a failure or a fault condition of the associated heater (15) and to report it to the control device (39).

## Revendications

1. Finisseuse de route (1) avec un véhicule tracteur (3) qui présente une trémie à matériau (5) située à l'avant dans le sens de la marche (F) pour la réception de matériau à paver, et avec une poutre lisseuse (9) tirée derrière le véhicule tracteur (3) dans le sens de la marche (F) pour le compactage de matériau à paver, **caractérisé en ce que**
un générateur (G) pour fournir l'énergie électrique est prévu sur le véhicule tracteur (3),
une pluralité de dispositifs de chauffage électrique (15) pour le chauffage électrique de la poutre lisseuse (9) est prévue sur la poutre lisseuse (9),
la finisseuse de route (1) comprend un dispositif de distribution d'énergie (23) avec un réseau de lignes (25) configuré pour alimenter les appareils de chauffage électrique (15) avec l'énergie électrique fournie par le générateur (G),
**caractérisée en ce que**
le dispositif de distribution d'énergie (23) comprend une pluralité d'adaptateurs de puissance (27) prévus sur la poutre lisseuse (9), chacun d'entre eux étant affecté à l'un des dispositifs de chauffage électrique (15), et
la finisseuse de route (1) comprend un dispositif de commande (39) configuré pour commander les dispositifs de réglage de la puissance (27) afin d'ajuster dynamiquement et individuellement la puissance fournie au dispositif de chauffage électrique (15) respectivement associé,
la finisseuse de route (1) dans laquelle les adaptateurs de puissance (27) sont configurés pour ajuster la puis-sance fournie au dispositif de chauffage (15) respectivement associé par com-mande par paquets d'impulsions, ou dans laquelle les adaptateurs de puissance (27) étant configurés pour régler la puissance fournie au dispositif de chauffage (15) respectivement associé par commande d'angle de phase.

2. Finisseuse de route selon la revendication 1, dans laquelle les dispositifs de réglage de la puissance (27) sont configurés pour régler en continu la puissance fournie au dispositif de chauffage électrique (15) respectivement associé.

3. Finisseuse de route selon les revendications 1 ou 2, dans laquelle les adaptateurs de puissance (27) comprennent des adaptateurs de puissance, en particulier des adaptateurs à thyristor, et/ou des interrupteurs de puissance.

4. Finisseuse de route selon l'un des sinistres précédents, dans laquelle les adaptateurs de puissance (27) du réseau de lignes (25) sont chacun connectés électriquement en amont du dispositif de chauffage électrique associé (15).

5. Finisseuse de route selon l'une des exigences précédentes, les adaptateurs de puissance (27) étant connectés en parallèle les uns avec les autres.

6. Finisseuse de route selon l'une des revendications précédentes, dans laquelle une partie du réseau de lignes (25) située sur la poutre lisseuse (9) présente des embranchements (33) au niveau desquels le réseau de lignes (25) bifurque en direction d'au moins différents adaptateurs de courant (27) et des dispositifs de chauffage (15) associés.

7. Finisseuse de route selon l'une des revendications précédentes, le réseau de lignes (25) comprenant un fusible principal (29) qui est branché en aval du générateur (G) et en amont de tous les appareils de chauffage (15).

8. Finisseuse de route selon l'une des revendications précédentes, dans laquelle le dispositif de commande (39) est configuré pour déterminer une valeur de consigne respective pour les adaptateurs de puissance (27) et pour commander les adaptateurs de puissance (27) sur la base de la valeur de consigne respective.

9. Finisseuse de route selon la revendication 8, qui comprend en outre un dispositif de saisie (8) qui permet à un opérateur d'entrer la valeur de réglage en commun pour tous les dispositifs de chauffage (15), pour des groupes de dispositifs de chauffage (15) et/ou pour des dispositifs de chauffage individuels (15).

10. Finisseuse de route selon la revendication 8 ou 9, qui comprend en outre un ou plusieurs capteurs de température (45) sur la poutre lisseuse (9), dans lequel le dispositif de commande (39) est configuré pour prendre en compte une ou plusieurs sorties du capteur de température (45) ou des capteurs de température (45) en plus de la valeur de réglage lors de l'activation des adaptateurs de puissance (27).

11. Finisseuse de route selon la revendication 10, dans laquelle un capteur de température (45) est associé à chaque adaptateur de puissance (27).

12. Finisseuse de route selon l'une des revendications précédentes, le dispositif de commande (39) étant configuré pour commander les adaptateurs de puissance (27) par le biais d'une communication par ligne électrique sur le réseau de lignes (25) pour alimenter les dispositifs de chauffage (15) avec l'énergie électrique fournie par le générateur (G), ou pour commander les adaptateurs de puissance (27) par le biais d'un bus CAN ou via une connexion à un fil.

13. Finisseuse de route selon l'une des réclamations précédentes, dans laquelle les adaptateurs de puissance (27) sont configurés pour détecter et signaler au dispositif de commande (39) une défaillance ou un état de défaut du dispositif de chauffage associé (15).
